(19)

Europäisches Patentamt

European Patent Office

Office européen des brevets

(11)  **EP 2 736 210 A1**

(12)  # EUROPEAN PATENT APPLICATION

(43) Date of publication:
28.05.2014  Bulletin 2014/22

(51) Int Cl.:
*H04L 27/26* (2006.01)

(21) Application number: **12306466.9**

(22) Date of filing: **27.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Gacanin, Haris**
**2600 Antwerpen (BE)**
• **Van Bruyssel, Danny**
**2820 Bonheiden (BE)**

(74) Representative: **ALU Antw Patent Attorneys**
**Intellectual Property and Standards**
**Copernicuslaan 50**
**2018 Antwerp (BE)**

(54)  **Adapting the length of a cyclic extension over vectored lines**

(57)  A method is proposed for controlling communications over a plurality of subscriber lines (L1 .. LN). The communications make use of synchronous data symbols that are cyclically extended for ISI mitigation and that are jointly processed for crosstalk mitigation. The method comprises measuring individual channel impulse responses ($H_{i,p,k}$) for respective transmitter-receiver pairings (p) over the respective subscriber lines, characterizing time spreads ($TS_{i,p}$) of the respective measured channel impulse responses, determining a common optimal CE length value ($CE_{OPT}$) that is greater than, or equal to, the so-characterized time spreads, and enforcing the common optimal CE length value for further communications over the subscriber lines. The common optimal CE length value can be determined and enforced on a per direction of communication basis, or for both directions of communication.

Fig. 3

EP 2 736 210 A1

**Description**

**Technical Field of the Invention**

The present invention relates to a method and apparatus for controlling communications over a plurality of subscriber lines, the communications making use of synchronous data symbols that are cyclically extended for Inter symbol Interference (ISI) mitigation and that are jointly processed for crosstalk mitigation.

**Technical Background of the Invention**

crosstalk (or inter-channel interference) is a major source of channel impairment for Multiple Input Multiple output (MIMO) communication systems, such as Digital subscriber Line (DSL) communication systems.

As the demand for higher data rates increases, DSL systems are evolving toward higher frequency bands, wherein crosstalk between neighboring transmission lines (that is to say, transmission lines that are in close vicinity such as twisted copper pairs in a cable binder) is more pronounced (the higher frequency, the more coupling).

A MIMO system can be described by the following linear model:

$$\mathbf{Y}(k)=\mathbf{H}(k)\mathbf{X}(k)+\mathbf{Z}(k) \quad (1),$$

wherein the N-component complex vector **X,** respectively **Y,** denotes a discrete frequency representation, as a function of the frequency/carrier/tone index k, of the symbols transmitted over, respectively received from, the N channels, wherein the NxN complex matrix **H** is referred to as the channel matrix: the (i,j)-th component of the channel matrix **H** describes how the communication system produces a signal on the i-th channel output in response to a signal being transmitted to the j-th channel input; the diagonal elements of the channel matrix describe direct channel coupling, and the off-diagonal elements of the channel matrix describe inter-channel coupling (also referred to as the crosstalk coefficients),

and wherein the N-component complex vector **Z** denotes additive noise over the N channels, such as Radio Frequency Interference (RFI), thermal noise and alien interference.

Different strategies have been developed to mitigate crosstalk and to maximize effective throughput, reach and line stability. These techniques are gradually evolving from static or dynamic spectral management techniques to multi-user signal coordination.

One technique for reducing inter-channel interference is joint signal precoding: the transmit data symbols are jointly passed through a precoder before being transmitted over the respective communication channels. The precoder is such that the concatenation of the precoder and the communication channel results in little or no inter-channel interference at the receiver. Typically, the precoder performs a matrix-product in the frequency domain of a row-vector of signal samples to be jointly transmitted over multiple channels with a precoding matrix so as to compensate for an estimate of the coming crosstalk.

A further technique for reducing inter-channel interference is joint signal post-processing: the received data symbols are jointly passed through a postcoder before being detected. The postcoder is such that the concatenation of the communication channel and the postcoder results in little or no inter-channel interference at the receiver. Typically, the postcoder performs a matrix-product in the frequency domain of a row-vector of signal samples jointly received from multiple channels with a crosstalk cancellation matrix so as to cancel an estimate of the incurred crosstalk.

Signal precoding is particularly suited for downstream communication (toward customer premises), while signal post-processing is particularly suited for upstream communication (from customer premises). Either technique is often referred to as signal vectoring.

The choice of the vectoring group, that is to say the set of communication lines, the signals of which are jointly processed, is rather critical for achieving good crosstalk cancellation performances. Within a vectoring group, each communication line is considered as a disturbing line inducing crosstalk into the other communication lines of the group, and the same communication line is considered as a victim line receiving crosstalk from the other communication lines of the group. Crosstalk from lines that do not belong to the vectoring group is treated as alien noise and is not canceled.

Ideally, the vectoring group should match the whole set of communication lines that physically and noticeably interact with each other. Yet, local loop unbundling on account of national regulation policies and/or limited vectoring capabilities may prevent such an exhaustive approach, in which case the vectoring group would include a sub-set only of all the physically interacting lines, thereby yielding limited crosstalk mitigation performances.

Signal vectoring is typically performed at a traffic aggregation point, whereat all the data symbols concurrently transmitted over, or received from, multiple communication lines are available. For instance, signal vectoring is advantageously performed within a Digital subscriber Line Access Multiplexer (DSLAM) deployed at a central office (co) or as a fiber-fed remote unit closer to subscriber premises (street cabinet, pole cabinet, etc).

The transmit or received data symbols that are being jointly processed need to have their symbol boundaries aligned in time for linear model (1) to hold. Synchronous transmission of data symbols across all the vectored lines is guaranteed by the access node, whereas synchronous reception of data symbols at the access node is achieved by advertising specific timing advance values to be used by the respective customer Premises Equipment (CPE) over the respective subscriber lines.

A further level of transmission and reception coordination may be required for crosstalk estimation, such as super frame alignment (i.e., the SYNC symbols, which occur periodically after every 256 DATA symbols and which are used in G. 993.5 for crosstalk pilot signal insertion and detection, are aligned across all the vectored lines).

Also, in order to mitigate ISI, a Cyclic Extension (CE) is prepended to each and every data symbol so as to absorb the interference from the previous data symbol. The length of the cyclic extension shall be such that the impulse responses of the direct and crosstalk channels fit within the cyclic extension. If so, a one-tap frequency equalizer suffices for compensating for the induced channel distortion and interference, else a more complex time-equalization technique is required. The chosen CE length in turns determines the maximum loop length that is supported.

With the advent of new access technologies that are currently being standardized by the International Telecommunication Union (ITU), further network topologies are being considered wherein the access medium extends in-house without the need for an intermediary network gateway as per the current DSL standards. The usable throughput is thus limited by the characteristics of the subscriber loop from the central distribution point up to the customer premises, as well as by the structure of the in-house network, which may be composed of several bridge taps and connectors.

Due to the in-house network structure, the overall channel is characterized by a number of signal reflections caused by various propagation paths, as well as by various impedance mismatches along those propagation paths. The receiver receives the transmitted signal as a plurality of delayed and scaled replicas. Furthermore, the in-house transmission medium is often a low-quality medium (e.g., untwisted or loosely twisted copper pairs) that offers poor immunity to in-house interference (electromagnetic coupling, impulsive noise, etc). Consequently, the length of the channel impulse response may significantly change from one subscriber to another, from one connection plug within the home to another, and may as well vary in the course of time as domestic equipment are plugged in or out. If the channel impulse response goes beyond the configured CE length, the transmission performances severely degrade on account of the uncompensated ISI.

## Summary of the Invention

It is an object of the present invention to improve communication performances over a group of vectored lines that exhibit highly variable, unpredictable and fluctuating channel characteristics, e.g. when the access media extend in-house.

In accordance with a first aspect of the invention, a method for controlling communications over a plurality of subscriber lines is proposed. The communications make use of synchronous data symbols that are cyclically extended for ISI mitigation and that are jointly processed for crosstalk mitigation. The method comprises measuring individual channel impulse responses for respective transmitter-receiver pairings over the respective subscriber lines, characterizing time spreads of the respective measured channel impulse responses, determining a common optimal CE length value that is greater than, or equal to, the so-characterized time spreads, and enforcing the common optimal CE length value for further communications over the subscriber lines.

In one embodiment of the invention, the method further comprises, by communication units coupled to the respective subscriber lines, determining individual optimal CE length values that are greater than, or equal to, the respective time spreads, and advertising the individual optimal CE length values over the respective subscriber lines for determination of the common optimal CE length value as being further greater than, or equal to, the respective individual optimal CE length values.

In one embodiment of the invention, the common optimal CE length is determined and enforced on a per direction of communication basis.

In an alternative embodiment of the invention, the common optimal CE length is determined and enforced for both directions of communication.

In one embodiment of the invention, the individual channel impulse responses are measured while a first CE length value is in force over the subscriber lines. The first CE length value is set either to a default CE length value, or to a maximum allowed CE length value, or to a previously-determined value for the common optimal CE length.

In one embodiment of the invention, the characterization of a time spread of a measured channel impulse response comprises successively time-windowing the measured channel impulse response with step-wise decreasing time-windows till the windowed channel impulse response starts deviating noticeably from the measured channel impulse response.

In one embodiment of the invention, the windowed channel impulse response and the measured channel impulse response are compared with each other by computing a sum of absolute or square differences between respective ones of time/frequency-domain signal samples of the windowed channel impulse response and corresponding ones of time/frequency-domain signal samples of the measured channel impulse response.

In accordance with another aspect of the invention, a communication controller for controlling communications over a plurality of subscriber lines is proposed. The communications make use of synchronous data symbols that are cyclically extended for ISI mitigation and that are jointly processed for crosstalk mitigation. The communication controller is configured to determine a common optimal CE length value that is greater than, or equal to, characteristic time spreads of individual channel impulse responses that have been measured for respective transmitter-receiver pairings over the respective subscriber lines, and to enforce the common optimal CE length value for further communications over the subscriber lines.

In one embodiment of the invention, the communication controller is further configured to gather the measured channel impulse responses from respective communication units coupled to the respective subscriber lines, and to characterize the time spreads of the respective measured channel impulse responses.

In an alternative embodiment of the invention, the communication controller is further configured to gather individual optimal CE length values advertised by respective communication units coupled to the respective subscriber lines, which individual optimal CE length values being greater than, or equal to, the respective time spreads, and to determine the common optimal CE length value as being further greater than, or equal to, the respective individual optimal CE length values.

Such a communication controller may form part of an access node, such as a DSLAM, an Ethernet switch, an edge router, etc.

Such a communication controller may alternatively form part of a network manager, a network analyzer or alike.

In accordance with still another aspect of the invention, a communication unit for coupling to a subscriber line out of a plurality of subscriber lines is proposed. The communications over the plurality of subscriber lines make use of synchronous data symbols that are cyclically extended for ISI mitigation and that are jointly processed for crosstalk mitigation. The communication unit is configured to measure an individual channel impulse response for a given transmitter-receiver pairing over the subscriber line, to characterize a time spread of the measured channel impulse response, to determine an individual optimal CE length value that is greater than, or equal to, the so-characterized time spread, and to advertise the individual optimal CE length value to a remote network unit for determination of a common optimal CE length value that is greater than, or equal to, the individual optimal CE length value and that is enforced for further communications over the subscriber lines.

Such a communication unit may form part of an access node, or may form part of a subscriber device that supports wired communication over an access plant, such as a desktop, a laptop, a modem, a network gateway, a media gateway, etc.

The shortcomings and/or drawbacks of the prior art solutions are overcome and/or alleviated by adaptively adjusting the common CE length value used over all the subscriber lines of a vectoring group based on the channel impulse responses that have been actually observed and measured for each and every transmitter-receiver pairing over each and every subscriber line of the vectoring group.

During a preliminary learning phase, the individual channel impulse responses are measured between the respective transmitters and receivers by means of known pilot signals transmitted over all or some given tones (also known as probe or pilot tones) during all or some given symbol periods (e.g., SYNC symbols). Measurements of the channel impulse responses are typically performed at the receiver sides either in diagnostic mode, or during channel initialization (e.g., the so-called channel discovery and training phase), or during normal operation when the communication channel is tracked for any variation.

The measured channel impulse responses are then processed in the time domain to determine a minimum time window length that encompasses the time spreads of the respective measured channel impulse responses, and to derive a common optimal CE length by rounding up the so-determined minimum time window length to the nearest CE length value allowed by the standard, possibly including some margin to accommodate future channel variations, and possibly excluding subscriber lines whose channel impulse responses are aberrantly too long on account of e.g. bad channel conditions or CPE misbehavior.

The time-characterization of the measured channel impulse responses is either performed at the receiver side, or the channels measurements are made available to a remote network entity (e.g., an access node, a network manager) for further determination of the common optimal CE length.

The determination of the common optimal CE length can be performed on a per direction of communication basis, or for both directions of communication. For instance, Time Division Duplexing (TDD) communication systems may use distinct CE lengths for downstream and upstream communications respectively, while Frequency Division Duplexing (FDD) communication systems shall enforce a common CE length for both downstream and upstream communications.

The present invention enables higher transmission data rates for multi-line vectored systems, while maintaining system robustness and performances, when compared to the method using a fixed non-adaptive common CE length, which needs to be set to an a-priori-determined worst-case value.

**Brief Description of the Drawings**

The above and other objects and features of the invention will become more apparent and the invention itself will be best understood by referring to the following description of an embodiment taken in conjunction with the accompanying drawings wherein:

- fig. 1 represents an example of an access plant topology to which the present invention is applicable;
- fig. 2A and 2B represent simulated channel impulse responses over such an access plant;
- fig. 3 represents an access node as per the present invention;
- fig. 4 represents a comparison plot between truncated and reference channel impulse responses for different truncation lengths and for a group of 10 subscriber lines; and
- fig. 5 represents a subscriber device as per the present invention.

**Detailed Description of the Invention**

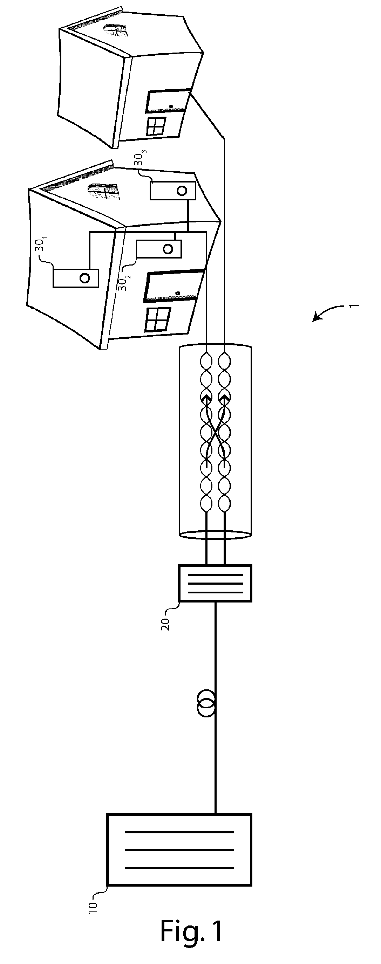

There is seen in fig. 1 a data communication system 1 comprising a network unit 10 at a CO, a remote unit 20 coupled via one or more optical fibers to the network unit 10, and further coupled via a copper loop plant to CPEs 30 at various subscriber premises.

The copper loop plant comprises a common access segment, wherein the subscriber lines are in close vicinity with each other and thus induce crosstalk into each other, and respective in-house network segments with different parallel branches for final connection to the CPEs 30.

The transmission media in the common access segment is typically composed of high-category copper Unshielded Twisted Pairs (UTP) merged within a screened binder. The transmission media used over the in-house segment is typically composed of individual lower-category copper pairs untwisted or loosely twisted.

The remote unit 20 typically comprises a vectoring processing unit for jointly processing the data symbols that are being transmitted over, or received from, the loop plant in order to mitigate the crosstalk induced within the common access segment and to increase the communication data rates achievable over the respective subscriber lines.

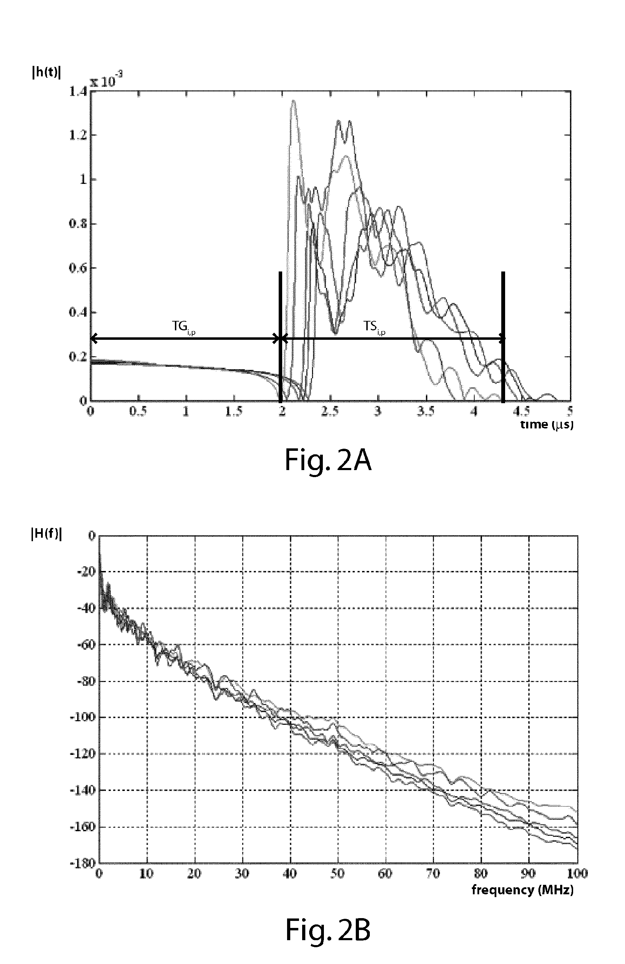

Fig. 2 represents simulations of the channel impulse response for a composite channel comprising a 200m access segment and an in-house segment with 20 parallel branches.

Fig. 2A plots the magnitude of the signal samples $h(t)$ of various channel impulse responses that have been observed in the time domain for the composite channel, and fig. 2B plots the magnitude $|H(f)|$ of these channel impulse responses in the frequency domain.

As one can see in fig. 2A, the individual various channel impulse responses exhibit nearly identical group delays and different time spreads. The group delay and the time spread are plotted on fig. 2A for a given transmitter-receiver pairing as $TG_{i,p}$ and $TS_{i,p}$ respectively.

The group delay affects all transmitted symbols identically. The group delay is compensated for by the receiver and thus does not contribute to the ISI.

The CE length shall be designed such that the CE absorbs all the possible time spreads, or at least a significant portion thereof. The optimal CE length value that is chosen is to be balanced against the induced ISI: a shorter CE directly translates into a higher data rate, yet the higher induced ISI at the same time degrades the Signal to Noise Ratio (SNR) and thus the achievable data rate. Thus, one has to determine a suitable point in time beyond which the remaining power of the channel impulse response is negligible compared to the receive signal and noise power. This point in time typically encompasses a significant portion of the time spread of the measured channel impulse response, yet does not necessarily coincide with the vanishing point of the measured channel impulse response.

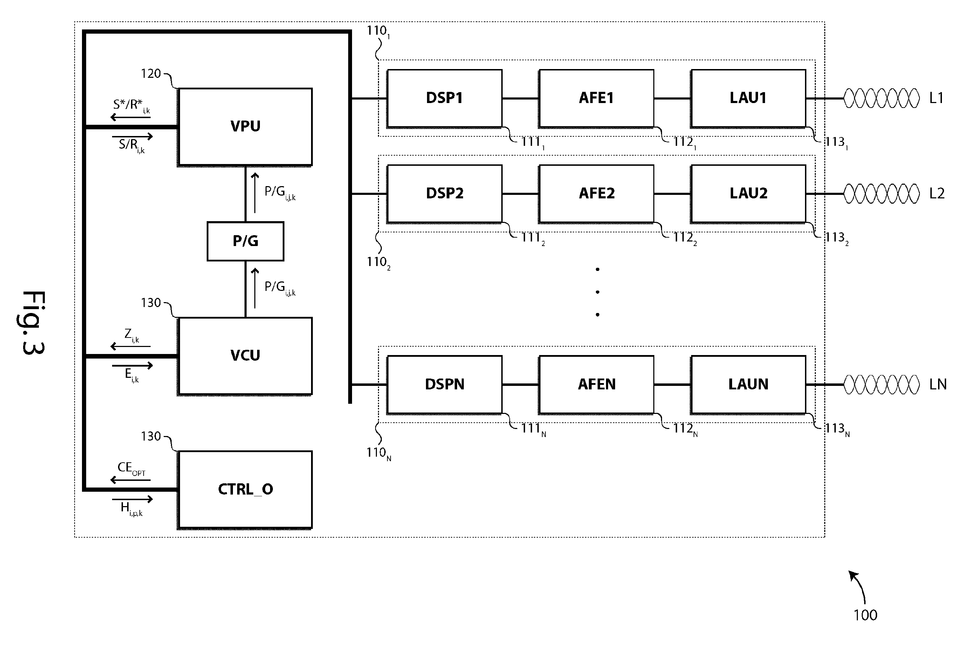

There is seen in fig. 3 an access node 100 as per the present invention comprising the following functional blocks:

- N transceivers 110;
- a Vectoring Processing Unit 120 (or VPU);
- a vectoring control Unit 130 (or VCU) for controlling the operation of the VPU 120; and
- a communication controller 140 (or CTRL_O) for controlling the operation of the transceivers 110.

The transceivers 110 are respectively coupled to the subscriber lines L1 to LN, which are assumed to form part of the same vectoring group. The transceivers 110 are also individually coupled to the VPU 120, to the VCU 130 and to the communication controller 140. The VCU 130 is further coupled to the VPU 120.

Each one of the transceivers 110 comprises:

- a Digital signal Processor (DSP) 111;
- an Analog Front End (AFE) 112; and
- a Line Adaptation Unit (LAU) 113.

The N DSPs 111 are coupled to respective ones of the N AFE units 112. The N AFEs 112 are further coupled to respective ones of the N LAUs 113. The N LAUs 113 are further coupled to respective ones of the N subscriber lines L1 to LN.

Each one of the AFEs 112 comprises a Digital-to-Analog Converter (DAC) and an Analog-to-Digital Converter (ADC), a transmit filter and a receive filter for confining the signal energy within the appropriate communication frequency bands while rejecting out-of-band interference, a line driver for amplifying the transmit signal and for driving the transmission line, and a Low Noise Amplifier (LNA) for amplifying the receive signal with as little noise as possible.

Each one of the LAUs 113 comprises a hybrid for coupling the transmitter output to the transmission line and the transmission line to the receiver input while achieving low transmitter-receiver coupling ratio (e.g., by means of echo cancellation techniques), further transmit and receive high-pass filters for filtering out any unwanted signals present in the POTS or ISDN frequency bands, impedance-matching circuitry for adapting to the characteristic impedance of the transmission line, and isolation circuitry (typically a transformer).

Each one of the DSPs 111 is arranged to operate both a downstream communication channel and an upstream communication channel.

Each one of the DSPs 111 is further configured to operate a control channel that is used to transport control traffic between peer transceivers, such as diagnosis or management commands and responses. Control traffic is multiplexed with user traffic over the DSL channel.

More specifically, each one of the DSPs 111 is for encoding and modulating user and control data into digital data symbols, and for de-modulating and decoding user and control data from digital data symbols.

The following transmit steps are typically performed within the DSPs 111:

- data encoding, such as data multiplexing, framing, scrambling, error correction encoding and interleaving;
- signal modulation, comprising the steps of ordering the carriers according to a carrier ordering table, parsing the encoded bit stream according to the bit loadings of the ordered carriers, and mapping each chunk of bits onto an appropriate transmit constellation point (with respective carrier amplitude and phase), possibly with Trellis coding;
- signal scaling;
- Inverse Fast Fourier Transform (IFFT);
- cyclic Prefix (CP) insertion; and possibly
- time-windowing.

The following receive steps are typically performed within the DSPs 111:

- CP removal, and possibly time-windowing;
- Fast Fourier Transform (FFT);
- Frequency EQualization (FEQ);
- signal de-modulation and detection, comprising the steps of applying to each and every equalized frequency sample an appropriate constellation grid, the pattern of which depends on the respective carrier bit loading, detecting the expected transmit constellation point and the corresponding transmit bit sequence, possibly with Trellis decoding, and re-ordering all the detected chunks of bits according to the carrier ordering table; and
- data decoding, such as data de-interleaving, RS decoding (byte errors, if any, are corrected at this stage), de-scrambling, frame delineation and de-multiplexing.

Each one of the DSPs 111 is further configured to supply transmit frequency samples to the VPU 120 before Inverse Fast Fourier Transform (IFFT) step for joint signal precoding, and to supply receive frequency samples to the VPU 120 after Fast Fourier Transform (FFT) step for joint signal post-processing.

Each one of the DSPs 111 is further configured to receive corrected frequency samples from the VPU 120 for further transmission or detection. Alternatively, the DSPs 111 may receive correction samples to add to the initial frequency samples before further transmission or detection.

The VPU 120 is configured to mitigate the crosstalk induced over the transmission lines L1 to LN. This is achieved by multiplying a vector **S** of transmit frequency samples with a precoding matrix **P** so as to pre-compensate with an estimate of the expected crosstalk (downstream), or by multiplying a vector **R** of receive frequency samples with a crosstalk cancellation matrix **G** so as to post-compensate with an estimate of the incurred crosstalk (upstream).

Let i and j denote line indexes ranging from 1 to N, k a frequency index, and 1 a data symbol index. In case of FDD transmission, the frequency index k takes on different and nonoverlapping range values depending on whether downstream or upstream communication is considered. In case of TDD transmission, the frequency index k may take on common range values for both downstream and upstream communications.

Let $S^1_{i,k}$ and $S^{*1}_{i,k}$ denote the transmit downstream frequency samples transmitted over line Li during data symbol 1 before and after crosstalk pre-compensation by the VPU 121 respectively.

Similarly, let $R^1_{i,k}$ and $R^{*1}_{i,k}$ denote the receive upstream frequency samples received from line Li during data symbol I before and after crosstalk cancellation respectively.

We have:

$$\mathbf{S}^{*1}_k = \begin{bmatrix} S^{*1}_{1,k} \\ S^{*1}_{2,k} \\ \vdots \\ S^{*1}_{N,k} \end{bmatrix} = \mathbf{P}_k \cdot \mathbf{S}^1_k = \begin{bmatrix} 1 & P_{1,2,k} & \cdots & P_{1,N,k} \\ P_{2,1,k} & 1 & & \vdots \\ \vdots & & & P_{N-1,N,k} \\ P_{N,1,k} & \cdots & P_{N,N-1,k} & 1 \end{bmatrix} \cdot \begin{bmatrix} S^1_{1,k} \\ S^1_{2,k} \\ \vdots \\ S^1_{N,k} \end{bmatrix} \quad (2),$$

and

$$\mathbf{R}^{*1}_k = \begin{bmatrix} R^{*1}_{1,k} \\ R^{*1}_{2,k} \\ \vdots \\ R^{*1}_{N,k} \end{bmatrix} = \mathbf{G}_k \cdot \mathbf{R}^1_k = \begin{bmatrix} 1 & G_{1,2,k} & \cdots & G_{1,N,k} \\ G_{2,1,k} & 1 & & \vdots \\ \vdots & & & G_{N-1,N,k} \\ G_{N,1,k} & \cdots & G_{N,N-1,k} & 1 \end{bmatrix} \cdot \begin{bmatrix} R^1_{1,k} \\ R^1_{2,k} \\ \vdots \\ R^1_{N,k} \end{bmatrix} \quad (3).$$

In the matrix **P** or **G,** a row i represents a particular victim line Li, while a column j represents a particular disturber line Lj. At the intersection, the coupling coefficient that should be applied to the corresponding disturber transmit or receive frequency sample for mitigating over the victim line Li the crosstalk from the disturber line Lj. Not all the coefficients of the matrix need to be determined, for instance on account of limited vectoring capabilities first assigned to the strongest crosstalkers, or still for instance due to the fact that some lines do not noticeably interact with each other. The undetermined coefficients are preferably set to 0.

Also, it is noteworthy that a communication line for which vectoring operation is not supported or not enabled, such as a legacy line, yet that still noticeably interferes with other communication lines, is only considered as a disturber line within the vectoring group. In the matrix **P** or **G,** the row coefficients for mitigating the crosstalk induced over such a disturber-only line are all set to 0.

The VCU 130 is basically for controlling the operation of the VPU 120, and more specifically for estimating or updating the crosstalk coefficients between vectored lines, and for initializing or updating the precoding matrix **P** and the crosstalk cancellation matrix **G** from the so-estimated crosstalk coefficients.

The VCU 130 starts first by configuring the respective downstream and upstream pilot sequences to be used over the lines L1 to LN. The pilot digit transmitted over line Li at frequency index k during a given symbol period 1 is denoted as $Z^1_{i,k}$. The pilot sequence comprises L pilot digits $\{Z^1_{i,k}\}_1$ to be transmitted over L symbol periods. The pilot sequences are mutually orthogonal.

The VCU 130 gathers respective slicer errors as measured during the detection of the pilot digits by the remote CPEs for downstream communication, and by the DSPs 111 for upstream communication. The equalized interference measurement carried out over a victim line Li at frequency index k during symbol period I is denoted as $E^1_{i,k}$.

Next, the VCU 130 correlates the interference measurements $\{E^1_{i,k}\}_1$ as measured over the victim line Li with the respective pilot digits $\{Z^1_{j,k}\}_1$ transmitted over the disturber line Lj to get an estimate of the equalized crosstalk coefficients from line Lj into line Li at frequency index k. As the pilot sequences are mutually orthogonal, the contributions from the other disturber lines are filtered out after this correlation step.

The VCU 130 can now proceed with the computation of the precoding matrix **P** and the crosstalk cancellation matrix **G** from the so-determined crosstalk coefficients. The VCU 130 can use a first-order matrix inversion to compute the coefficients of the precoding matrix **P** and the crosstalk cancellation matrix **G**, or any other suitable method.

The communication controller 140 is for controlling the communication parameters used over the respective subscriber lines, and more specifically for determining an optimal CE length to be enforced over a given vectoring group.

More specifically, the communication controller 140 gathers the channel frequency responses (also known as channel coefficients) that have been measured over the respective subscriber lines L1 to LN for both downstream and upstream communications. The upstream channel coefficients are made available by the DSPs 111, while the downstream channel coefficients are obtained from the remote CPEs through the respective control channels.

Let NG denote the CE length that is in force over the subscriber lines L1 to LN while the channel measurements are being carried out. The CE length NG is preferably set by the communication controller 140 to a maximum CE length value that is allowed by the standard and/or that is supported by the respective equipment. Alternatively, a default CE length value can be used.

Let $H_{i,p,k}$ denote the channel coefficient that has been measured over a given subscriber line Li, for a given transmitter-receiver pairing p in a given direction of communication, and at a given tone index k ranging from 0 to K-1. The channel coefficients $H_{i,p,k}$ are typically obtained by dividing the received frequency samples Y(k) by the transmitted frequency samples X(k) while a known pilot symbol is being transmitted, and by reiterating this operation over many successive data symbols so as to get more and more accurate channel estimate.

Typically, the channel coefficients $H_{i,p,k}$ are only available for the carriers k that are actively used in a given direction of communication, and the frequency samples corresponding to the unused carriers shall typically be filtered out before conversion into the time domain.

Also, the channel coefficients $H_{i,p,k}$ may only be available every few tones. The channel impulse response at the intermediary frequency indexes can then be obtained by interpolation.

Let $h_{i,p}(n)$ denote the time-representation of the channel frequency response, n denoting a time index ranging from 0 to 2K-1.

we have:

$$h_{i,p}(n) = \underset{k=0..2K-1}{IDFT}\left(H_{i,p,k}\right), n = 0..2K-1 \quad (4),$$

with

$$H_{i,p,k} = H^{*}_{i,p,2K-k}, k = K+1..2K-1 \quad (5),$$

wherein * denotes the complex conjugate,
and wherein $H_{i,m,0}$ (DC frequency) and $H_{i,m,k}$ (Nyquist frequency) are real.

One may also use an over-sampled IDFT operation with more than 2k samples.

Let $h_{m,i,p}(n)$ denote a truncated channel impulse response that is obtained by truncating $h_{i,p}(n)$ with a rectangular time-window of length NG-m, m ranging from 1 to NG-1:

$$h_{m,i,p}(n) = \begin{cases} h_{i,p}(n), & n = 0..NG-m \\ 0, & n = NG-m+1..2K-1 \end{cases} \quad (6).$$

Let determine the maximum truncation length $m_{i,p}$ for which $h_{i,p}(n)$ and $h_{m,i,p}(n)$ still substantially match.

For instance, one may use the Mean Square Error (MSE) or Mean Absolute Error (MAE) in the time domain to compare these two signals:

$$MSE_{m,i,p} = \frac{1}{2K}\sum_{n=0}^{2K-1}\left(h_{i,p}(n) - h_{m,i,p}(n)\right)^{2} = \frac{1}{2K}\sum_{n=NG-m+1}^{2K-1}h^{2}_{i,p}(n) \quad (7),$$

or

$$MAE_{m,i,p}=\frac{1}{2K}\sum_{n=0}^{2K-1}\left|h_{i,p}(n)-h_{m,i,p}(n)\right|=\frac{1}{2K}\sum_{n=NG-m+1}^{2K-1}\left|h_{i,p}(n)\right| \quad (8).$$

Alternatively, $h_{i,p}(n)$ and $h_{m,i,p}(n)$ may be compared in the frequency domain after further DFT conversion, and possibly some further frequency filtering for the unused frequency bands.

The maximum truncation length $m_{i,p}$ is obtained by determining the time index at which the MSE or MAE starts increasing abruptly. Indeed, we may expect that initially only noise energy is being truncated, meaning the corresponding MSE roughly averages to some noise floor level, and that, from a certain truncation index onwards, some signal energy with substantially higher power is being wrongly truncated, meaning the MSE starts increasing substantially beyond the noise level.

Alternative methods for determining the time spread of a channel impulse response that has been measured over a subscriber line are conceivable as well. For instance, the characteristic time spread of a channel impulse response can be computed as twice the Root Mean Square (RMS) value of the measured power delay profile.

Next, the process is re-iterated for all transmitter/receiver pairings p over all the vectored lines Li in a given direction of communication or for both directions of communication, thereby yielding a set of maximum truncation lengths $\{m_{i,p}\}_{i,p}$ for the respective measured channel impulse responses.

For instance and referring to the top subscriber line plotted on fig. 1, there would be 3 downstream channel impulse responses measured for the transmitter-receiver pairings $20 \rightarrow 30_1$, $20 \rightarrow 30_2$ and $20 \rightarrow 30_3$ respectively. Similarly, there would be 3 upstream channel impulse responses measured for the transmitter-receiver pairings $30_1 \rightarrow 20$, $30_2 \rightarrow 20$ and $30_3 \rightarrow 20$ respectively. If different CE length values apply to downstream and upstream communications respectively, the 3 downstream measured impulse responses are processed independently from the 3 upstream channel impulse responses. If a common CE length applies to both downstream and upstream communications, all 6 measured channel impulse responses are processed all together.

The measured channel impulse responses that are abnormally too long, e.g. on account of bad channel conditions or CPE misbehavior, may be excluded. To this purpose, the actual loop length (as obtained from field data, or as measured by means of e.g. time domain reflectometry) may further be used to discard a channel impulse response that seems to be inappropriate.

Finally, the communication controller 140 determines a common optimal CE length value $CE_{OPT}$ for enforcement over the vectored lines L1 to LN in a given direction of communication or for both directions of communication as:

$$CE_{OPT}=\max_{i,p}\left(NG-m_{i,p}\right) \quad (9).$$

The so-determined value $CE_{OPT}$ is further rounded up to the nearest CE length value that is allowed by the standard. Some safety margin may be further included in order to accommodate future channel variations.

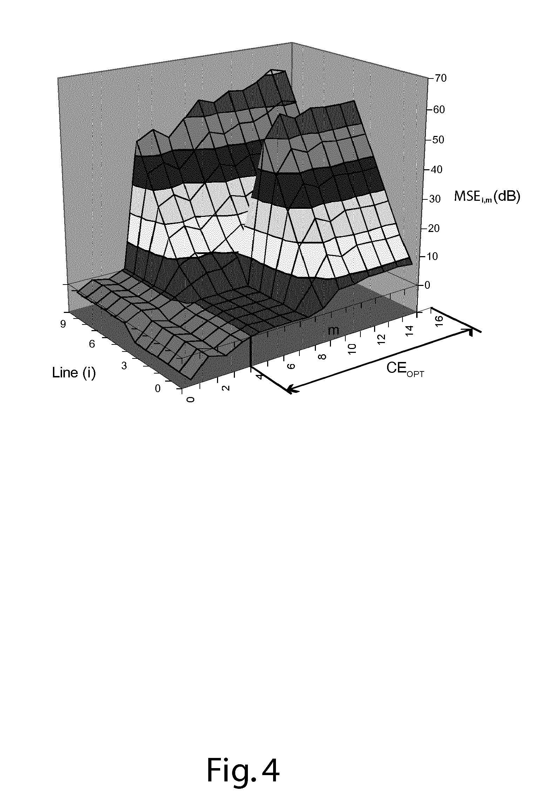

The determination of the optimal CE length value is illustrated in fig. 4.

The MSE between the m-truncated channel impulse response and the measured channel impulse response has been plotted as a function of m, and for 10 respective subscriber lines, assuming NG = 16. we note that a different signal power is injected over the subscriber lines, while a common noise power is assumed.

As one can see, the truncated channel impulse response and the reference channel impulse response start deviating from each other from m = 9 onwards for the first five subscriber lines, and from m = 5 onwards for the last five subscriber lines. This means that most of the energy of the channel impulse response is expected to be constrained within the first NG - 8 = 8 time samples for the first five subscriber lines, and within the first NG - 4 = 12 time samples for the last five subscriber lines.

The common optimal CE length value over the group of 10 subscriber lines shall thus be set to NG - 4 = 12 time samples, or to a greater value if some safety margin are to be included.

The communication controller 140 communicates the common optimal CE length value $CE_{OPT}$ to the respective transceivers coupled to the vectored lines L1 to LN, including the transceivers 110. The common optimal CE length value $CE_{OPT}$ substitutes for the former NG value, and is enforced over all the vectored lines L1 to LN for a given direction of communication or for both directions of communication, and from a particular data symbol onwards.

Once the common optimal CE length value $CE_{OPT}$ is in force, the communication controller 140 tracks for any substantial channel variation and adjusts the common optimal CE length value $CE_{OPT}$ to a greater or lower value whenever appropriate. To this purpose, the respective channel impulse responses are regularly measured and processed as aforementioned, yet the truncation index m in equation (6) and further may take on negative values. A CE length value that is no longer appropriate, meaning that is too short compared to the time spreads of the measured channel impulse responses, will cause severe ISI that may bias the measurements of the channel impulse response. Yet, one can rely here on the averaging across multiple pilot symbols to still get an accurate guess of the actual channel impulse response as the induced ISI yields some random zero-mean uncorrelated noise.

In an alternative embodiment, the determination of the common optimal CE length value $CE_{OPT}$ is based on individual optimal CE length values that are advertised by the respective receivers coupled to the vectored lines L1 to LN.

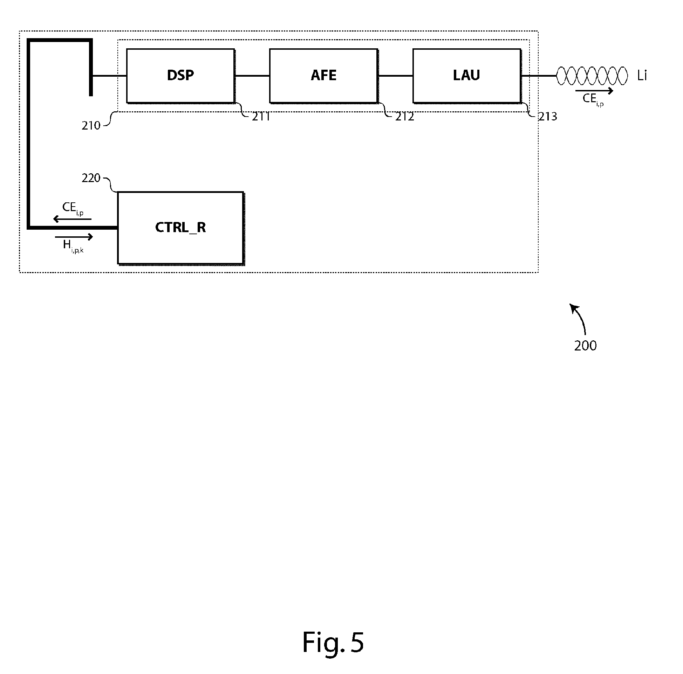

There is seen in fig. 5 a subscriber device 200 as per the present invention comprising the following functional blocks:

- a transceiver 210; and
- a communication controller 220 (or CTRL_R) for controlling the operation of the transceiver 210.

The transceiver 210 is coupled to a subscriber line Li that forms part of a given vectoring group, and comprises the same functional blocks as aforementioned. The transceiver 210 is further coupled to the communication controller 220.

The communication controller 220 gathers the channel coefficients $H_{i,p,k}$ that have been measured by the transceiver 210 over the subscriber line Li for a given transmitter-receiver pairing p, and determines an individual optimal CE length value $CE_{i,p}$ to be used over the subscriber line Li as aforementioned. The individual optimal CE length $CE_{i,p}$ is then returned to the transceiver 210 for communication to a remote network unit, such as an access node to which the subscriber device 200 is coupled.

The set of individual optimal CE lengths values $\{CE_{i,p}\}_{i,p}$ advertised over the respective subscriber lines of the vectoring group for a given direction of communication or for both directions of communication are next processed for determination of a common optimal CE length value to be enforced over all the vectored lines of the vectoring group.

In an alternative embodiment, the computation of the common optimal CE length value $CE_{OPT}$ is carried out by a Network Management System (NMS). The NMS maintains a Management Information Base (MIB) wherein appropriate communication parameter values are held for the respective subscriber lines. The NMS interacts with a Management Entity (ME) of the access node, which maintains a local replica of a relevant portion of the MIB in a local data repository.

The NMS comprises a communication controller as per the communication controller 140 that fetches downstream and upstream individual channel impulse responses measured over the respective subscriber lines of a given vectoring group for a given direction of communication or for both directions of communication. A common optimal CE length value $CE_{OPT}$ for that vectoring group is then determined by the NMS according to the measured channel impulse response lengths. The common optimal CE length value $CE_{OPT}$ is then pushed into the MIB of the access node for further enforcement over the corresponding subscriber lines in a given direction of communication or for both directions of communication.

In an alternative embodiment, the NMS directly fetches the individual optimal CE length values advertised by each and every receiver over the respective subscriber lines of a given vectoring group for a given direction of communication or for both directions of communication, and computes the common optimal CE length value $CE_{OPT}$ therefrom.

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. other hardware, conventional and/or custom, such as read only memory (ROM), random access memory (RAM), and non volatile storage, may also be included.

**Claims**

1. **A method for controlling** communications over **a plurality of subscriber lines** (L1 .. LN), the communications making use of synchronous data symbols that are cyclically extended for Inter symbol Interference ISI mitigation and that are jointly processed for crosstalk mitigation,
   *wherein* the method comprises measuring **individual channel impulse responses** ($H_{i,p,k}$) for respective **transmitter-receiver pairings** (p) over the respective subscriber lines, characterizing **time spreads** ($TS_{i,p}$) of the respective measured channel impulse responses, determining **a common optimal Cyclic Extension CE length value** ($CE_{OPT}$) that is greater than, or equal to, the so-characterized time spreads, and enforcing the common optimal CE length value for further communications over the subscriber lines.

2. **A method** according to claim 1, *wherein* the method further comprises, by **communication units** coupled to the respective subscriber lines, determining **individual optimal CE length values** ($CE_{i,p}$) that are greater than, or equal to, the respective time spreads, and advertising the individual optimal CE length values over the respective subscriber lines for determination of the common optimal CE length value as being further greater than, or equal to, the respective individual optimal CE length values.

3. **A method** according to claim 1, *wherein* the common optimal CE length value is determined and enforced for **a given direction of communication.**

4. **A method** according to claim 1, *wherein* the common optimal CE length value is determined and enforced for **both directions of communication.**

5. **A method** according to claim 1, *wherein* the individual channel impulse responses are measured while **a first CE length value** is in force over the subscriber lines,
   *and wherein* the first CE length value is set to a default CE **length value,** or to **a maximum allowed CE length value,** or to **a previously-determined value** for the common optimal CE length.

6. **A method** according to claim 1, *wherein* the characterization of **a time spread** of **a measured channel impulse response** comprises successively time-windowing the measured channel impulse response with step-wise decreasing time-windows till the windowed channel impulse response starts deviating noticeably from the measured channel impulse response.

7. **A method** according to claim 6, *wherein* the windowed channel impulse response and the measured channel impulse response are compared with each other by computing **a sum of absolute or square differences** between respective ones of time/frequency-domain signal samples of the windowed channel impulse response and corresponding ones of time/frequency-domain signal samples of the measured channel impulse response.

8. **A communication controller** (140) for controlling communications over **a plurality of subscriber lines** (L1 .. LN), the communications making use of synchronous data symbols that are cyclically extended for Inter symbol Interference ISI mitigation and that are jointly processed for crosstalk mitigation,
   *wherein* the communication controller is configured to determine **a common optimal Cyclic Extension CE length value** ($CE_{OPT}$) that is greater than, or equal to, **characteristic time spreads** ($TS_{i,p}$) of **individual channel impulse responses** ($H_{i,p,k}$) that have been measured for respective **transmitter-receiver pairings** (p) over the respective subscriber lines, and to enforce the common optimal CE length value for further communications over the subscriber lines.

9. **A communication controller** (140) according to claim 8, *wherein* the communication controller is further configured to gather the measured channel impulse responses from respective **communication units** coupled to the respective subscriber lines, and to characterize the time spreads of the respective measured channel impulse responses.

10. **A communication controller** (140) according to claim 8, *wherein* the communication controller is further configured to gather **individual optimal CE length values** ($CE_{i,p}$) advertised by respective **communication units** coupled to the respective subscriber lines, which individual optimal CE length values being greater than, or equal to, the respective time spreads, and to determine the common optimal CE length value as being further greater than, or equal to, the respective individual optimal CE length values.

11. **An access node** (100) comprising **a** c**ommunication controller** (140) according to any of claims 8 to 10.

12. **A network manager** comprising a **communication controller** according to claim any of claims 8 to 10.

13. **A communication unit** for coupling to **a subscriber line** (Li) out of **a plurality of subscriber lines** (L1 .. LN), the communications over the subscriber lines making use of synchronous data symbols that are cyclically extended for Inter symbol Interference ISI mitigation and that are jointly processed for crosstalk mitigation,
*wherein* the communication unit is configured to measure **an individual channel impulse response** ($H_{i,p,k}$) for **a given transmitter-receiver pairing** (p) over the subscriber line, to characterize **a time spread** ($TS_{i,p}$) of the measured channel impulse response, to determine **an individual optimal Cyclic Extension CE length value** ($CE_{i,p}$) that is greater than, or equal to, the so-characterized time spread, and to advertise the individual optimal CE length value to **a remote network unit** for determination of a common **optimal** CE **length value** ($CE_{OPT}$) that is greater than, or equal to, the individual optimal CE length value and that is enforced for further communications over the subscriber lines.

14. **A subscriber device** (200) comprising **a communication unit** according to claim 13.

15. **An access node** comprising **a communication unit** according to claim 13.

Fig. 1

Fig. 2A

Fig. 2B

Fig. 3

Fig. 4

Fig. 5

**Europäisches Patentamt**
**European Patent Office**
**Office européen des brevets**

# EUROPEAN SEARCH REPORT

Application Number

EP 12 30 6466

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | TURCZA P ET AL: "RLS based MIMO channel identification for FEXT compensation in vectored xDSL system", CIRCUIT THEORY AND DESIGN, 2005. PROCEEDINGS OF THE 2005 EUROPEAN CONFERENCE ON CORK, IRELAND 29TH AUGUST - 1ST SEPTEMB, PISCATAWAY, NJ, USA,IEEE, vol. 2, 29 August 2005 (2005-08-29), pages 251-254, XP010845396, ISBN: 978-0-7803-9066-9 * page 1 - page 3, left-hand column * | 1-15 | INV. H04L27/26 |
| Y | US 7 542 411 B1 (GOH WEE PENG [US] ET AL) 2 June 2009 (2009-06-02) * column 1, line 24 - column 2, line 59 * * figure 2 * | 1-15 | |
| A | US 2010/177833 A1 (MUELLER ARNDT [US]) 15 July 2010 (2010-07-15) * paragraph [0005] * * paragraph [0013] * * paragraph [0025] - paragraph [0032] * * paragraph [0044] - paragraph [0046] * | 1-15 | TECHNICAL FIELDS SEARCHED (IPC) H04L |

The present search report has been drawn up for all claims

| Place of search | Date of completion of the search | Examiner |
|---|---|---|
| Munich | 18 March 2013 | Marzenke, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 12 30 6466

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2013

| Patent document cited in search report | | Publication date | Patent family member(s) | | Publication date |
|---|---|---|---|---|---|
| US 7542411 | B1 | 02-06-2009 | US<br>US<br>US | 7542411 B1<br>2009232193 A1<br>2011142114 A1 | 02-06-2009<br>17-09-2009<br>16-06-2011 |
| US 2010177833 | A1 | 15-07-2010 | CN<br>EP<br>KR<br>US<br>WO | 102273159 A<br>2377285 A1<br>20110108338 A<br>2010177833 A1<br>2010083076 A1 | 07-12-2011<br>19-10-2011<br>05-10-2011<br>15-07-2010<br>22-07-2010 |

EPO FORM P0459